# FASCICULE DE BREVET EUROPEEN

(11) **EP 3 017 968 B1**
(45) Date de publication et mention de la délivrance du brevet: **01.03.2017**
(21) Numéro de dépôt: 15003171.4
(22) Date de dépôt: 05.11.2015
(51) Int. Cl.: B60C 23/04

(54) **DISPOSITIF DE BRIDAGE D'UN BOÎTIER DE CAPTEUR DE PRESSION ET DE TEMPÉRATURE SUR UNE JANTE DE VÉHICULE ET BOÎTIER ADAPTÉ**
EINSPANNVORRICHTUNG EINES GEHÄUSES FÜR EINEN DRUCK- UND TEMPERATURSENSOR AUF EINER RADFELGE EINES FAHRZEUGS, UND ENTSPRECHEND ANGEPASSTES GEHÄUSE
CLAMPING DEVICE FOR A HOUSING OF A PRESSURE AND TEMPERATURE SENSOR ON A VEHICLE RIM AND ADAPTED HOUSING

(30) Priorité: 07.11.2014 FR 1460817
(43) Date de publication de la demande: 11.05.2016
(73) Titulaire: LDL Technology, 31520 Ramonville Saint Agne (FR)
(72) Inventeur: Luce, Dominique, FR-31210 Bordes-de-Rivière (FR)
(74) Mandataire: Richebourg, Michel François

(56) Documents cités:
- EP-A1- 2 392 480

## Description

### DOMAINE D'APPLICATION DE L'INVENTION

La présente invention a trait au domaine des systèmes de surveillance de la pression et de la température des pneumatiques de véhicules et notamment aux adaptations permettant de fixer à la jante dans les meilleures conditions, le boîtier électronique de mesure contenant le capteur.

### DESCRIPTION DE L'ART ANTÉRIEUR

Une des solutions actuelles de bridage consiste à utiliser un cerclage fixant le boîtier électronique en passant par dessous le boîtier ou par des fenêtres aménagées dans ce dernier afin de passer la sangle et de la refermer sur le pourtour de la jante. Une telle solution présente l'inconvénient de voir les flancs du pneumatique venir s'appliquer sur le boîtier lors des phases de montage et de démontage du pneumatique sur la jante.
La soumission de telles contraintes au boîtier peut avoir pour des conséquences telles que :
- l'arrachement du cerclage,
- l'endommagement du boîtier,
- l'endommagement de la paroi interne du pneumatique lors de cet arrachement,
- l'apparition d'hernies dans les parties endommagées,
- etc...

Il a été par exemple constaté lors du montage de pneumatique de poids lourds qu'un boîtier de capteur fixé à la jante avec une sangle ou cerclage en acier inoxydable de section plate (12 par 1,2 mm) ne peut subir un déplacement axial parallèle à l'axe de la roue de plus de 40 mm. En effet, cette course correspond à la limite plastique de déformation de la sangle. Aussi, une fois ce déplacement atteint lors des phases de montage ou de démontage, la déformation de la sangle a pour conséquence :
- que le boîtier n'est plus plaqué contre la jante et tourne librement ou, plus couramment
- que la sangle se casse.
Un tel déplacement est largement possible du fait que la partie centrale de la jante atteint couramment 80 mm.

Bien que les problèmes techniques cités ci-dessus n'y soient pas relevés, on retrouve cette configuration dans le document US 2004/0118195 qui décrit un appareil pour surveiller les paramètres d'un pneumatique monté sur une roue de véhicule comprenant un capteur configuré pour une installation à l'intérieur du pneumatique. Le capteur est fixé à la jante de la roue afin d'éviter que ce dernier ne soit exposé au liquide présent dans ledit pneumatique. Selon un mode de réalisation, le capteur est fixé à la roue au moyen de deux sangles ou cerclages qui s'étendent autour d'une surface circonférentielle de la jante et qui s'associent à un socle couplé audit capteur. En effet, le fait que le capteur ou que le boîtier contenant le capteur soit associé à un socle augmente la hauteur de l'ensemble et donc de l'obstacle qu'il constitue lors des phases de montage ou de démontage. De plus, les volumes du socle et du boîtier assemblés adoptent une forme périphérique concave qui devient une zone de retenue du talon du pneumatique, retenue qui va se solder par la rupture soit de la liaison entre le socle et le boîtier soit du ou des cerclages comme décrit plus haut. L'utilisation de cerclages a de plus non seulement l'inconvénient de ne pas constituer la solution la plus résistante mais également de ne pas pouvoir s'adapter à des profils coniques de jante. En effet, par définition une bande présente un même diamètre sur ses deux rebords n'autorisant donc pas son adaptation à une variation de diamètre.

Il existe également le dispositif décrit dans le document US 4507956 qui propose de relier un module électronique à une jante au moyen de câbles qui sont reliés aux extrémités d'un ressort. La présence d'un ressort rend la fixation plus complexe et plus onéreuse sans pouvoir garantir une bonne tension.

Les différents inconvénients décrits ci-dessus ont amené la demanderesse à proposer le dispositif décrit dans le document EP 2392480 qui proposait le bridage sur jante d'un boîtier électronique de mesure de la pression et/ou de la température à l'intérieur d'un pneumatique remarquable en ce qu'il était constitué par au moins un câble qui faisant, au moins un tour autour de la jante et venant plaquer le boîtier sur la surface de la jante, formait de par son matériau, le nombre de fils qui le composait et leur torsion, une liaison élastique autorisant un déplacement axial au dit boîtier sur la jante évitant ainsi au dit boîtier de supporter la contrainte du pneumatique lors des phases de montage et de démontage.

Cette solution, bien que résolvant les problèmes de l'art antérieur, requiert la mise en tension du câble réalisée dans ce document au moyen d'une pince et un moyen de maintien en tension telle une vis.

### DESCRIPTION DE L'INVENTION

La demanderesse a mené des recherches visant à optimiser la fixation par câble d'un boîtier électronique sur une jante de pneumatique. Ces recherches ont abouti à la conception et à la réalisation d'un dispositif de bridage d'un boîtier de capteur de pression et de température sur une jante novateur susceptible de s'appliquer non seulement à un bridage exploitant un câble mais également à des bridages exploitant des bandes de matériaux plus ou moins larges telles des sangles, lien à section polygonale, etc...

Bien qu'un tel dispositif puisse s'installer en remplacement des moyens de bridage actuels, sa mise en oeuvre a conduit la demanderesse à faire évoluer le boîtier électronique qui peut présenter lui-même des adaptations dédiées à ce dispositif, boîtier adapté qui constitue un autre objet de l'invention.

Selon l'invention, le dispositif de bridage d'un boîtier électronique sur une jante de pneumatique, le dispositif comprenant un boîtier électronique d'un capteur de pression et/ou de température, au moins un lien souple faisant au moins une boucle autour de la jante et au moins un moyen de mise en tension dudit lien souple, est remarquable en ce que ledit moyen de mise en tension comprend un levier monté pivotant par rapport à une platine qui vient en appui sur la jante, ledit levier passant d'une position relevée à une position rabattue contre la platine,
- ladite platine accueillant une première extrémité dudit lien souple,
- ledit levier accueillant la deuxième extrémité dudit lien souple, la position relevée autorisant le montage des extrémités et la position rabattue mettant en tension ledit lien souple à des fins de fixation du boîtier sur la jante.

Cette caractéristique est particulièrement avantageuse en ce qu'elle facilite le montage et la fixation du boîtier de capteur sur une jante en évitant l'utilisation d'une pince et d'une vis de maintien de la tension comme cela était précédemment proposé dans l'art antérieur. En effet, l'utilisation d'un levier va garantir la facilité d'installation ainsi que la mise en tension du lien souple. Le maintien de la tension constitue également une garantie pour le maintien en position rabattue du levier. De plus, en contrôlant la longueur du lien en regard du diamètre de la jante, il est possible de définir une tension du lien souple qui est identique d'une jante à l'autre. Cette caractéristique est particulièrement avantageuse, étant donné que ce type de fixation doit permettre une stratégie d'évitement au boîtier lorsqu'il est soumis aux contraintes des joues de pneumatiques lors des opérations de montage. En effet, la tension du lien souple doit autoriser le boitier à ne pas constituer un obstacle lors desdites opérations.

Le passage d'une position relevée à une position rabattue, va constituer le repère d'une bonne fixation.

Afin de permettre le réglage de la tension mais également de permettre l'utilisation d'un même lien souple pour plusieurs diamètres, ladite platine adopte la forme d'une crémaillère proposant par sa pluralité de dents, une pluralité de positions d'accueil de ladite première extrémité de lien souple. Toujours pour répondre au même besoin, le dispositif comprend une rallonge de platine venant se fixer à une extrémité de cette dernière afin de proposer une ou plusieurs positions d'accueil supplémentaires pour ladite première extrémité afin d'autoriser le montage sur une large gamme de diamètres de jante. Ainsi, selon les diamètres, il est possible de simplement rallonger la platine au moyen de ladite rallonge pour autoriser la fixation du boîtier sans changer le levier, la platine ou le lien.

Il existe plusieurs solutions pour mettre en oeuvre le lien souple, qui peut être par exemple une ou plusieurs boucles d'une sangle, une ou plusieurs boucles d'un câble. Néanmoins, afin d'associer les avantages de l'utilisation d'un câble faisant plusieurs tours autour de la jante à ceux d'un dispositif de bridage conforme à l'invention, ledit lien souple est, selon une autre caractéristique préférée, constitué par un câble dont les deux extrémités se rejoignent pour former un anneau qui est aplati pour former un lien allongé dédoublé faisant le tour de la jante et disposant d'une boucle à chaque extrémité. Une première boucle vient coopérer avec la platine et la deuxième boucle vient coopérer avec le levier.

Selon une autre caractéristique particulièrement avantageuse de l'invention, ledit lien souple est constitué par un câble dont les deux extrémités sont repliées sur elles-mêmes pour former une boucle à chaque extrémité, une première boucle venant coopérer avec la platine et la deuxième boucle venant coopérer avec le levier. Une telle configuration a pour avantage d'économiser au moins un tiers de longueur de câble.

Afin de le protéger mais également pour faciliter le glissement dudit boîtier sur le long du câble, ledit câble est un câble tressé recouvert de plastique. Une telle caractéristique évite également d'endommager la jante. Selon un mode de réalisation préféré mais non limitatif, le câble est en inox de la nuance 316L.

Selon un mode de réalisation préféré mais non limitatif, le levier et la platine sont réalisés en thermoplastique tel un matériau plastique haute performance de type dérivé de polyamide.

Selon une autre caractéristique particulièrement avantageuse de l'invention, le dispositif est remarquable en ce que ledit boîtier adopte une surface inférieure venant en contact avec la jante et une surface supérieure préformée pour accueillir ledit lien souple à des fins de retenue tout en autorisant le glissement dudit boîtier sur la jante le long dudit lien souple.

Un autre objet de l'invention est constitué par le boîtier de capteur de pression et/ou de température venant se fixer à l'intérieur d'une jante de pneumatique au moyen d'un lien souple. Ainsi, le dispositif de l'invention est remarquable en ce que ledit boîtier électronique forme ledit moyen de mise en tension du lien souple et comprend deux parties montées pivotantes l'une par rapport à l'autre de façon à former une platine venant en contact avec la jante et un levier passant d'une position relevée à une position rabattue contre la platine, ledit levier accueillant une première extrémité d'un lien souple faisant le tour de la jante dont la deuxième extrémité est accueillie par ladite platine. Par système d'excentrique, le passage de la position relevée à la position rabattue assure la mise en tension du lien à des fins de fixation du boîtier sur la jante.

Selon une autre caractéristique particulièrement avantageuse de l'invention, les composants contenus dans le boîtier sont intégrés à la platine et/ou au levier.

Selon une autre caractéristique particulièrement avantageuse de l'invention, ledit levier comprend l'ensemble des composants électroniques nécessaires à la prise de mesure de la pression et/ou de la température dans le pneumatique.

Selon une autre caractéristique particulièrement avantageuse de l'invention, ladite platine du boîtier comprend l'ensemble des composants électroniques nécessaires à la prise de mesure de la pression et/ou de la température. Une telle configuration limite les chocs transmis aux composants électroniques lors de la fermeture du système.

Selon une autre caractéristique particulièrement avantageuse de l'invention, ledit levier du boîtier est percé d'un orifice autorisant l'évacuation des salissures s'introduisant entre le levier et la platine.

Selon une autre caractéristique particulièrement avantageuse, la demanderesse a conçu un set de montage comportant le moyen de mise en tension du câble, le boîtier électronique (si le boîtier ne constitue pas ledit moyen de mise en tension), et un jeu de trois câbles bouclés proposant trois longueurs différentes. Un tel set permet d'équiper par le dispositif de l'invention, la totalité de la gamme de jantes des roues pour camion selon les standards ETRTO, TRA et JATMA.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemples non limitatifs, plusieurs modes de réalisation d'un dispositif de bridage et d'un boîtier conformes à l'invention.

### BRÈVE DESCRIPTION DES DESSINS

La figure 1 est un dessin schématique d'une vue partielle en perspective d'un premier mode de réalisation du dispositif en position ouverte et disposé sur la jante;
La figure 2 est un dessin schématique du dispositif de la figure 1 en position fermée;
La figure 3 est un dessin schématique d'une vue partielle en perspective du dispositif de la figure 1 accueillant une rallonge pour sa platine ;
La figure 4 est un dessin schématique d'une vue partielle de côté en coupe du dispositif de la figure 1 en position fermée;
La figure 5 est un dessin schématique d'une vue partielle en perspective d'un deuxième mode de réalisation du dispositif en position ouverte et disposé sur la jante;
La figure 6 est un dessin schématique du dispositif de la figure 5 en position fermée;
La figure 7 est un dessin schématique d'une vue partielle en perspective du dispositif de la figure 5 accueillant une rallonge pour sa platine;
La figure 8 est un dessin schématique d'une vue partielle de côté en coupe du dispositif de la figure 5 en position fermée;
La figure 9 est un dessin schématique d'une vue partielle en perspective d'un troisième mode de réalisation du dispositif en position ouverte;
La figure 10 est un dessin schématique du dispositif de la figure 9 en position fermée;
La figure 11 est un dessin schématique d'une vue partielle de côté en coupe du dispositif de la figure 9 en position fermée.

### DESCRIPTION DES MODES DE RÉALISATION PRÉFÉRÉS

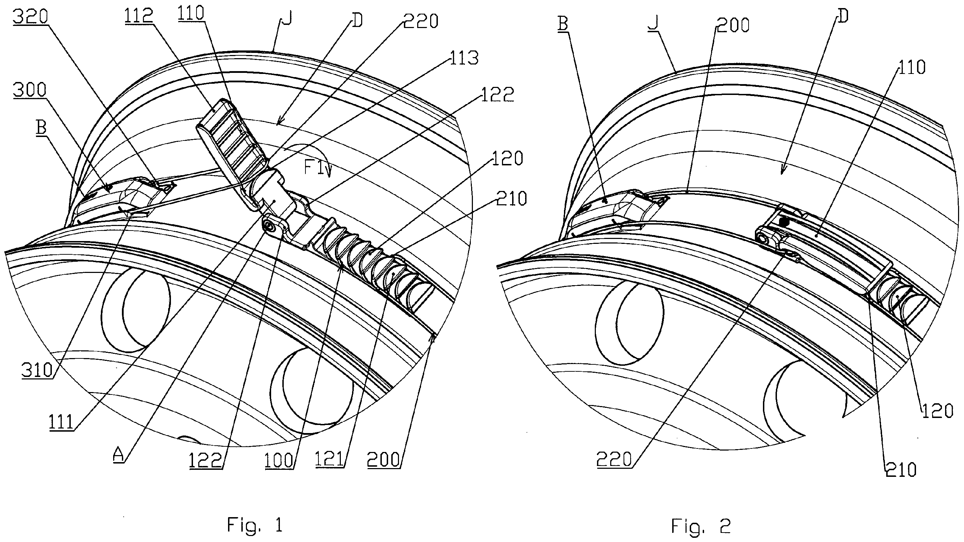

Comme illustré sur les dessins des figures 1 et 2, le dispositif D de fixation du boîtier électronique B à la jante J comprend un câble 200 associé à un module de mise en tension 100 du câble 200 qui plaque le boîtier B contre la surface de la gorge centrale de la jante J.

Ce boîtier B comprend une coque en plastique 300 qui contient classiquement un capteur de pression et/ou de température.
Comme illustré, le module de mise en tension 100 comprend un levier 110 monté pivotant par rapport à une platine 120 qui vient en appui contre la jante J.

Le câble 200 comporte deux extrémités qui se rejoignent pour former un anneau qui est aplati pour proposer un lien allongé dédoublé faisant le tour de la jante J et disposant d'une boucle à chaque extrémité, une première boucle 210 venant coopérer avec la platine 120 et la deuxième boucle 220 venant coopérer avec le levier 110. Une telle configuration permet de s'adapter à plusieurs profils de jante notamment celles présentant une forme sensiblement conique.

Ce levier 110 comprend une première extrémité 111 équipée d'un axe de rotation A et une deuxième extrémité 112 sur laquelle va agir le monteur afin de faire basculer le levier 110 selon la flèche F1. La boucle du câble 200 vient s'engager sur le levier 110 en position ouverte.

Selon le mode de réalisation illustré, la coque 300 dudit boîtier B est préformée sur sa face supérieure de deux gorges latérales longitudinales d'accueil 310 et 320 de portion du câble dédoublé 200. Ces gorges sont préformées pour retenir le câble 200 tout en autorisant le glissement du boîtier sur la surface de la jante J le long du câble (clipsage). Ces deux gorges 310 et 320 présentant un écartement fixe, il est alors important qu'un écartement entre les deux portions du câble 200 dédoublé soit également respecté. Pour ce faire, comme illustré, ledit levier 110 est préformé sur sa face intérieure pour offrir une butée de retenue 113 à la deuxième boucle 220 du câble 200, butée reprenant une forme arrondie afin de proposer un rayon de courbure adapté. De plus, le boîtier 300 est disposé à environ trente centimètres du module de mise en tension 100 afin d'autoriser le glissement dans les deux sens.

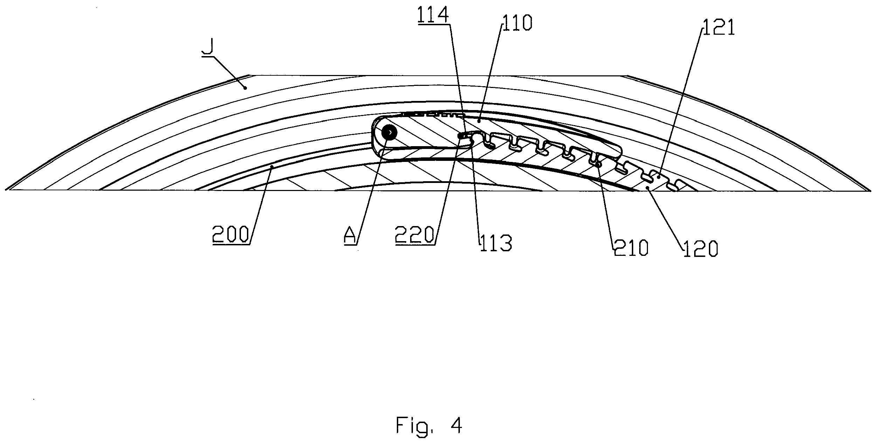

Comme illustrée, la face intérieure du levier 110 est également préformée pour présenter des nervures transversales et longitudinales afin de proposer un levier à la fois rigide et léger. La platine 120 adopte la forme d'une crémaillère proposant par sa pluralité de dents 121, une pluralité de positions d'accueil de ladite première boucle 210. Selon le mode de réalisation illustré, la platine 120 adopte une forme s'adaptant à la surface de la jante J sur laquelle elle vient en appui par sa face inférieure et est préformée au niveau de sa face supérieure :
- à une première extrémité, de deux projections latérales 122 espacées pour accueillir la première extrémité 111 dudit levier 110 et pour former un palier à l'arbre de rotation A du levier 110,
- des projections latérales jusqu'à sa deuxième extrémité, de dents 121 servant de butées de retenue de la première boucle 210 du câble 200. Comme pour la retenue 113 préformée dans le levier 110, les dents adoptent un profil arrondi.
Une fois,
- une première boucle 210 du câble 200 engagée sur une des dents 121 de la platine 120,
- une deuxième boucle 220 du câble 200 engagée sur le levier 110 relevé, et
- le boitier B associé par ses gorges 310 et 320 aux portions parallèles de câble 200,
le levier 110 est rabattu selon la flèche F1 pour atteindre la position illustrée par les dessins des figures 2 et 4.
Comme illustré, le module de mise en tension 100 du câble 200 ne présente alors pas de saillie radiale supérieure à celle du boitier B. Le câble 200 est alors en tension et le boîtier B est plaqué contre la surface de la jante J.

Le dessin de la figure 4 précise en position rabattue la position des boucles 210 et 220 du câble 200 ainsi que le profil des butées 113 et 121. Comme illustrée, la butée 113 est associée à une rainure supérieure 114 dans laquelle vient se loger la bouche 220 lors de la mise en tension. De même, chaque dent 121 est associée à une rainure inférieure 122. La présence de ces rainures permet de créer une surface de retenue verticale empêchant tout désengagement du câble.
Comme illustrée, une fois le levier 110 rabattu, la boucle 210 se trouve à une hauteur inférieure par rapport à l'axe de rotation A empêchant ainsi toute rotation du levier 110 en sens inverse.

De plus, les nervures transversales présentes sur la face intérieure du levier 110 viennent alors se loger et coopérer avec les intervalles libres entre les dents 121 ou crans de fixation. Cette caractéristique a pour effet d'empêcher toute sortie du câble et de garantir que le câble se trouve au fond dudit intervalle. En effet, comme le câble n'est pas compressible, si ce dernier n'est pas bien positionné, il est impossible de basculer le levier dans sa position finale rabattue.

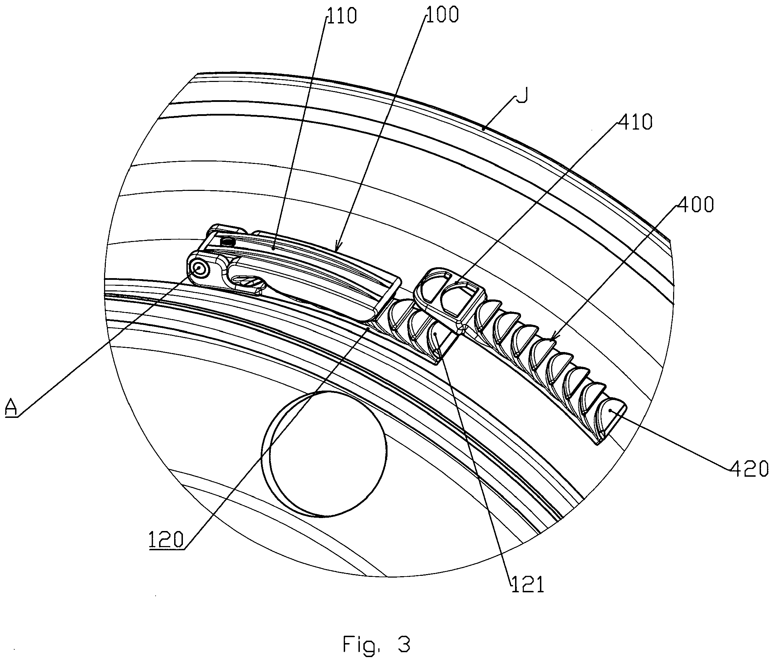

Comme illustré sur le dessin de la figure 3, le dispositif D comprend en outre une rallonge 400 de la platine 120. Cette rallonge consiste en une crémaillère additionnelle comportant
- à une extrémité des préformes 410 lui permettant de venir s'associer à une ou plusieurs dents 121 de la crémaillère de la platine initiale, et
- sur le reste de sa longueur une pluralité de dents 420 supplémentaires. On comprend qu'une telle rallonge permet d'utiliser le même câble 200 et le même module de mise en tension 100 sur une jante de diamètre supérieur.

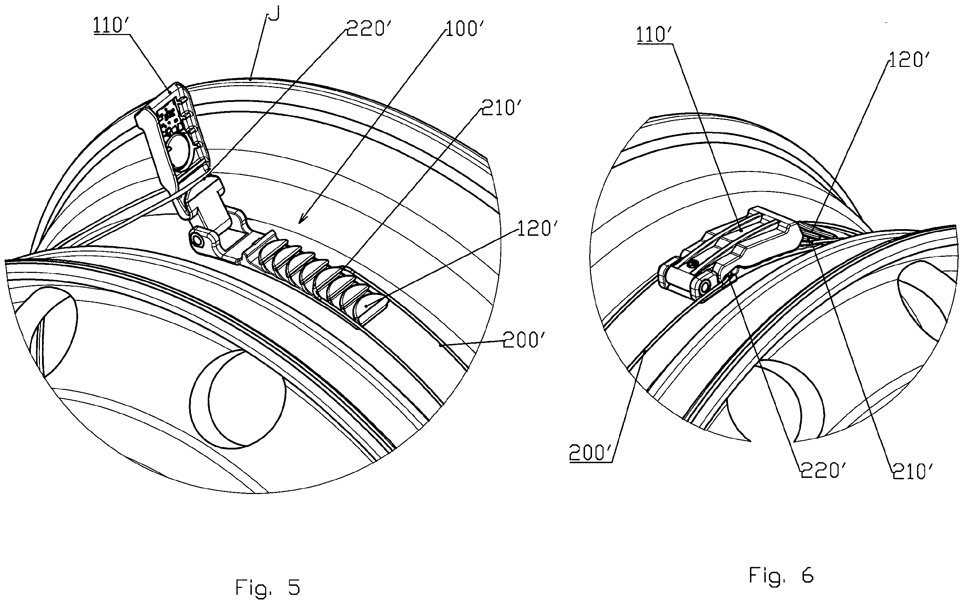

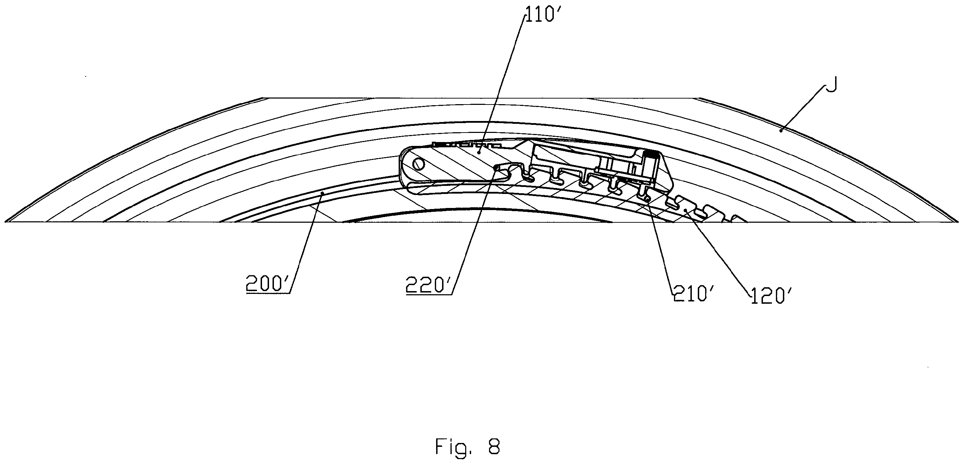

Les dessins des figures 5 à 8 décrivent un autre mode de réalisation reprenant les principes de l'invention mais où les efforts de miniaturisation de la demanderesse lui ont permis d'intégrer directement dans le levier 110' du module de mise en tension 100' du câble 200' les composants classiquement présents dans un boîtier électronique séparé. Le boîtier B' est alors constitué par le module de mise en tension 100'.

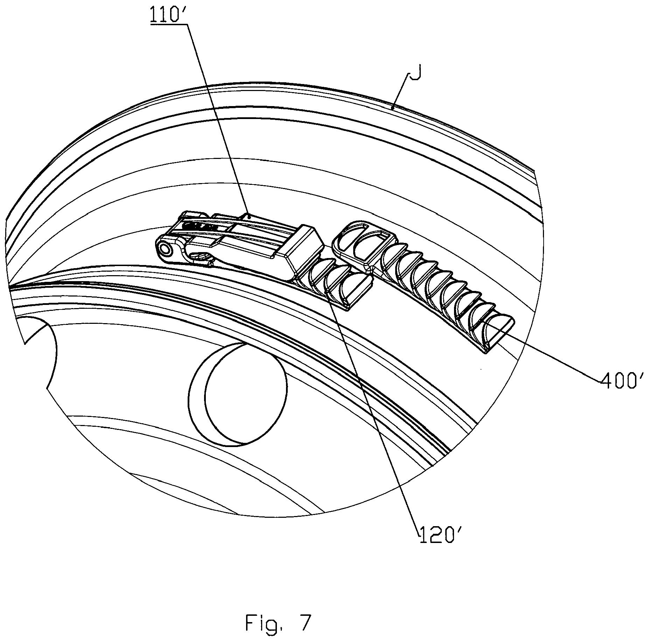

La fixation devient alors plus simple en ce qu'il n'est plus nécessaire (en comparaison du mode de réalisation précédent) de clipser les portions du câble 200' sur le boîtier. Une telle conception permet aussi de diminuer le nombre de pièces. La mise en tension est également réalisée comme décrit ci-dessus en ce que le levier 110' associé à une boucle 220' vient pivoter pour se rabattre contre une platine 120' associée à une autre boucle 210' du câble dédoublé 200' pour sa mise en tension du câble 200' et donc le bridage du boîtier/levier 110' sur la jante J.
Comme pour le mode de réalisation précédent, une rallonge 400' (cf. figure 7) autorise l'utilisation d'un même boîtier pour plusieurs diamètres de jante.

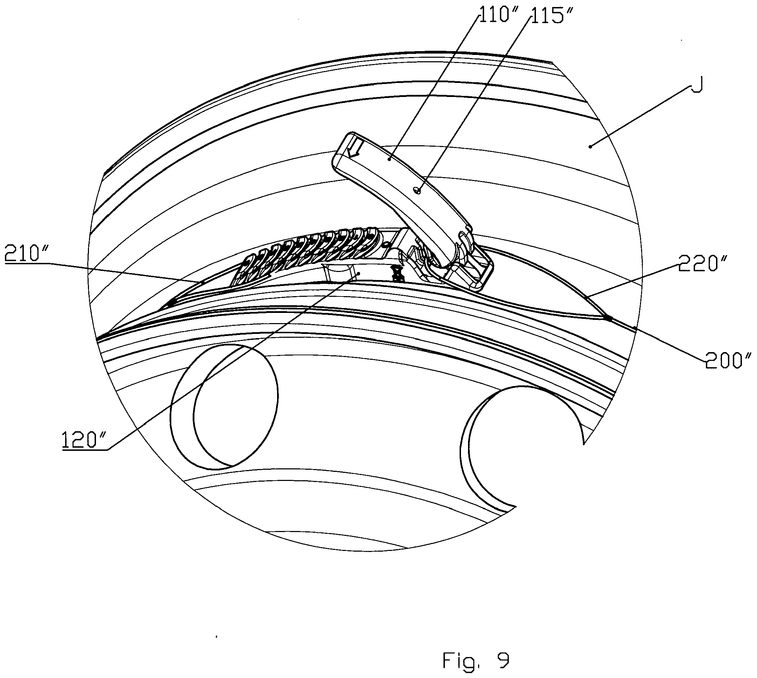

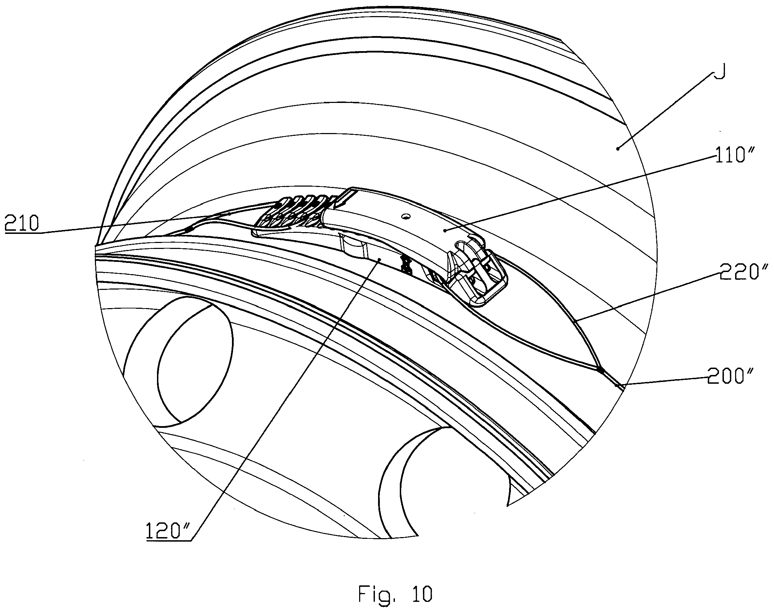

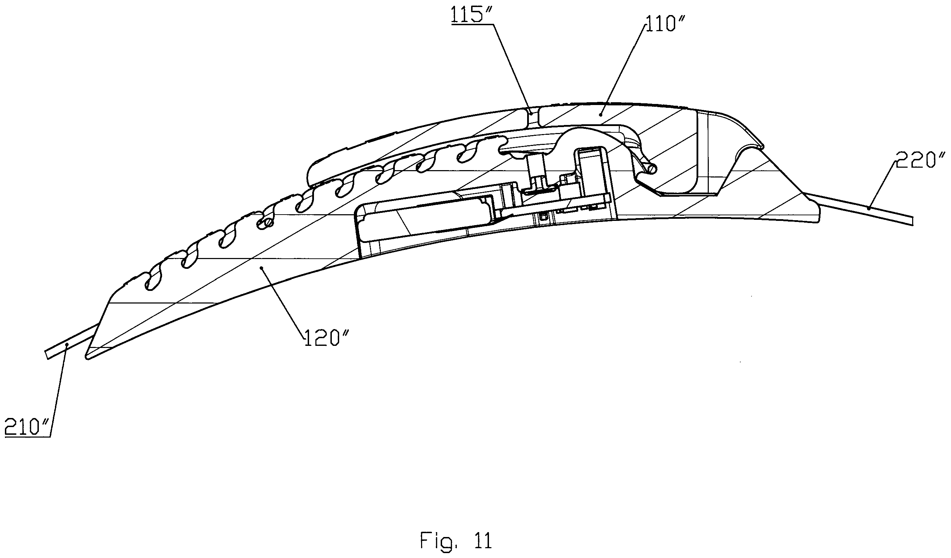

Les dessins des figures 9 à 11 décrivent un autre mode de réalisation reprenant les principes de l'invention et qui diffère du précédent en ce que c'est la platine 120" du boîtier qui accueille l'ensemble des composants électroniques nécessaires à la prise de mesure de la pression et/ou de la température.

Comme illustré, ledit levier 110" du boîtier est percé d'un orifice 115" autorisant l'évacuation des salissures s'introduisant entre le levier 110" et la platine 120".

Ces dessins illustrent également un autre mode de réalisation du lien souple 200" qui est ici constitué par un câble dont les deux extrémités sont repliées sur elles-mêmes pour former une boucle à chaque extrémité 210", 220", une première boucle 210" venant coopérer avec la platine 120" et la deuxième boucle 220" venant coopérer avec le levier 110''. Ces boucles 210" et 220" sont formées par sertissage de l'extrémité du câble sur une portion dudit câble située plus en arrière.

On comprend que le dispositif et les boîtiers, qui viennent d'être ci-dessus décrits et représentés, l'ont été en vue d'une divulgation plutôt que d'une limitation. Bien entendu, divers aménagements, modifications et améliorations pourront être apportés à l'exemple ci-dessus, sans pour autant sortir du cadre de l'invention.

## Revendications

1. Dispositif (D) de bridage d'un boîtier électronique (B) sur une jante (J) de pneumatique, le dispositif (D) comprenant un boîtier électronique (B) d'un capteur de pression et/ou de température, au moins un lien souple (200) faisant au moins une boucle autour de la jante (J) et au moins un moyen de mise en tension dudit lien souple,
**CARACTÉRISÉ PAR LE FAIT QUE** ledit moyen de mise en tension comprend un levier (110) monté pivotant par rapport à une platine (120) qui vient en appui sur la jante (J),
ledit levier (110) passant d'une position relevée à une position rabattue contre la platine (120),
ladite platine (120) accueillant une première extrémité (210) dudit lien souple (200),
ledit levier (110) accueillant la deuxième extrémité (220) dudit lien souple (200),
la position relevée autorisant le montage des extrémités (210 et 220) et la position rabattue mettant en tension ledit lien souple (200) à des fins de fixation du boîtier (B) sur la jante.

2. Dispositif (D) selon la revendication 1, **CARACTÉRISÉ PAR LE FAIT QUE** ladite platine (120) adopte la forme d'une crémaillère proposant par sa pluralité de dents (121), une pluralité de positions d'accueil de ladite première extrémité (210) de lien souple (200).

3. Dispositif (D) selon la revendication 1, **CARACTÉRISÉ PAR LE FAIT QU'**il comprend une rallonge de platine (400) venant se fixer à une extrémité de cette dernière (120) afin de proposer une ou plusieurs positions d'accueil supplémentaires pour ladite première extrémité (210) de lien souple (200) afin d'autoriser le montage sur une large gamme de diamètres de jante.

4. Dispositif (D) selon la revendication 1, **CARACTÉRISÉ PAR LE FAIT QUE** ledit lien souple (200) est constitué par un câble dont les deux extrémités se rejoignent pour former un anneau qui est aplati pour former un lien allongé dédoublé faisant le tour de la jante (J) et disposant d'une boucle à chaque extrémité (210, 220), une première boucle (210) venant coopérer avec la platine (120) et la deuxième boucle (220) venant coopérer avec le levier (110).

5. Dispositif (D) selon la revendication 1, **CARACTÉRISÉ PAR LE FAIT QUE** ledit lien souple (200") est constitué par un câble dont les deux extrémités sont repliées sur elles-mêmes pour former une boucle à chaque extrémité (210", 220"), une première boucle (210") venant coopérer avec la platine (120") et la deuxième boucle (220") venant coopérer avec le levier (110").

6. Dispositif (D) selon les revendications 4 ou 5, **CARACTÉRISÉ PAR LE FAIT QUE** ledit câble est un câble tressé recouvert de plastique.

7. Dispositif (D) selon la revendication 1, **CARACTÉRISÉ PAR LE FAIT QUE** ledit boîtier (B) adopte une surface inférieure venant en contact avec la jante et une surface supérieure préformée pour accueillir ledit lien souple (200) à des fins de retenue tout en autorisant le glissement dudit boîtier (B) sur la jante (J) le long dudit lien souple (200).

8. Dispositif selon la revendication 1, **CARACTÉRISÉ PAR LE FAIT QUE** ledit boîtier électronique forme ledit moyen de mise en tension du lien souple et comprend deux parties montées pivotantes l'une par rapport à l'autre de façon à former une platine (120', 120 ") venant en contact avec la jante (J) et un levier (110', 110 ") passant d'une position relevée à une position rabattue contre la platine (120', 120"), ladite platine (120', 120") accueillant une première extrémité (210', 210") d'un lien souple (200', 200") faisant le tour de la jante (J) dont la deuxième extrémité (220', 220") est accueillie par ledit levier (110', 110"), le passage de la position relevée à la position rabattue assurant la mise en tension du lien (200', 200") à des fins de fixation du boîtier sur la jante (J).

9. Dispositif (D) selon la revendication 8, **CARACTÉRISÉ PAR LE FAIT QUE** les composants contenus dans le boîtier sont intégrés à la platine et/ou au levier.

10. Dispositif (D) selon la revendication 8, **CARACTÉRISÉ PAR LE FAIT QUE** ledit levier (110') du boîtier comprend l'ensemble des composants électroniques nécessaires à la prise de mesure de la pression et/ou de la température.

11. Dispositif selon la revendication 8, **CARACTÉRISÉ PAR LE FAIT QUE** ladite platine (120") du boîtier comprend l'ensemble des composants électroniques nécessaires à la prise de mesure de la pression et/ou de la température.

12. Dispositif selon la revendication 8, **CARACTÉRISÉ PAR LE FAIT QUE** ledit levier (110") du boîtier est percé d'un orifice (115") autorisant l'évacuation des salissures s'introduisant entre le levier (110") et la platine (120").

## Patentansprüche

1. Vorrichtung (D) zum Klemmen eines Elektronikgehäuses (B) auf einer Felge (J) eines Reifens, wobei die Vorrichtung (D) ein Elektronikgehäuse (B) eines Druck- und/oder Temperatursensors umfasst, zumindest ein flexibles Band (200), das zumindest einmal rund um die Felge (J) führt und zumindest ein Mittel zum Spannen des besagten flexiblen Bandes,
**dadurch gekennzeichnet, dass** das besagte Mittel zum Spannen einen Hebel (110) umfasst, der im Verhältnis zu einer Platine (120), die sich an der Felge (J) anlegt, schwenkbar montiert ist,
wobei der besagte Hebel (110) von einer angehobenen Position in eine an die Platine (120) angelegte Position übergeht,
wobei die besagte Platine (120) ein erstes Ende (210) des besagten flexiblen Bandes (200) aufnimmt,
wobei der besagte Hebel (110) das zweite Ende (220) des besagten flexiblen Bandes (200) aufnimmt,
wobei die angehobene Position die Montage der Enden (210 und 220) erlaubt und die angelegte Position das besagte flexible Band (200) spannt, um das Gehäuse (B) auf der Felge zu befestigen.

2. Vorrichtung (D) nach Anspruch 1, **dadurch gekennzeichnet, dass** die besagte Platine (120) die Form einer Zahnstange annimmt, die durch ihre Vielzahl an Zähnen (121) eine Vielzahl an Aufnahmepositionen des besagten ersten Endes (210) des flexiblen Bandes (200) anbietet.

3. Vorrichtung (D) nach Anspruch 1, **dadurch gekennzeichnet, dass** sie eine Verlängerung der Platine (400) umfasst, die an einem Ende dieser letzteren (120) befestigt wird, um eine oder mehrere zusätzliche Aufnahmepositionen für das besagte erste Ende (210) des flexiblen Bandes (200) anzubieten, um die Montage auf einem breit angelegten Sortiment an Felgendurchmessern zu erlauben.

4. Vorrichtung (D) nach Anspruch 1, **dadurch gekennzeichnet, dass** das besagte flexible Band (200) aus einem Kabel besteht, dessen beiden Enden zusammengerührt werden, um einen Ring zu bilden, der plattgedrückt ist, um ein langgezogenes geteiltes Band zu bilden, das um die Felge (J) herum führt, und das an jedem Ende (210, 220) über eine Schleife verfügt, wobei eine erste Schleife (210) mit der Platine (120) zusammenwirkt und die zweite Schleife (220) mit dem Hebel (110) zusammenwirkt.

5. Vorrichtung (D) nach Anspruch 1, **dadurch gekennzeichnet, dass** das besagte flexible Band (200") aus einem Kabel besteht, dessen beiden Enden zusammengefaltet sind, um an jedem Ende (210", 220") eine Schleife zu bilden, wobei eine erste Schleife (210") mit der Platine (120") zusammenwirkt und die zweite Schleife (220") mit dem Hebel (110") zusammenwirkt.

6. Vorrichtung (D) nach den Ansprüchen 4 oder 5, dadurch gekenntzeichnet, dass das besagte Kabel ein mit Kunststoff überzogenes Flechtkabel ist.

7. Vorrichtung (D) nach Anspruch 1, **dadurch gekennzeichnet, dass** das besagte Gehäuse (B) eine Unterseite aufweist, die in Kontakt mit der Felge tritt und eine Oberseite, die vorgeformt ist, um das besagte flexible Band (200) aufzunehmen, um das besagte Gehäuse (B) zu halten, und dabei ein Gleiten desselben auf der Felge (J) entlang des besagten flexiblen Bandes (200) zu erlauben.

8. Vorrichtung nach Anspruch 1, **dadurch gekennzeichnet, dass** das besagte Elektronikgehäuse das besagte Mittel zum Spannen des flexiblen Bandes bildet und zwei zueinander schwenkbar montierte Abschnitte umfasst, um eine Platine (120', 120") zu bilden, die in Kontakt mit der Felge (J) tritt, sowie einen Hebel (110', 110"), der von einer angehobenen Position in eine an die Platine (120", 120") angelegte Position übergeht, wobei die besagte Platine (120', 120") ein erstes Ende (210', 210") des besagten flexiblen Bandes (200', 200") aufnimmt, das um die Felge (J) herum führt, deren zweites Ende (220', 220") vom besagten Hebel (110', 110") aufgenommen wird, wobei der Übergang von der angehobenen Position in die angelegte Position für die Spannung des Bandes (200", 200") sorgt, um das Gehäuse auf der Felge (J) zu befestigen.

9. Vorrichtung (D) nach Anspruch 8, **dadurch gekennzeichnet, dass** die Komponenten, die im Gehäuse enthalten sind, in die Platine und/oder den Hebel integriert sind.

10. Vorrichtung (D) nach Anspruch 8, **dadurch gekennzeichnet, dass** der besagte Hebel (110') des Gehäuses sämtliche elektronischen Komponenten umfasst, die zum Messen des Drucks und/oder der Temperatur benötigt werden.

11. Vorrichtung nach Anspruch 8, **dadurch gekennzeichnet, dass** die besagte Platine (120") des Gehäuses sämtliche elektronischen Komponenten umfasst, die zum Messen des Drucks und/oder der Temperatur benötigt werden.

12. Vorrichtung nach Anspruch 8, **dadurch gekennzeichnet, dass** in den besagten Hebel (110") des Gehäuses ein Loch (115") gebohrt ist, um die Evakuierung der Verschmutzungen zu erlauben, die zwischen den Hebel (110") und die Platine (120") eindringen.

## Claims

1. Device (D) for clamping an electronic box (B) on a tyre rim (J), the device (D) comprising an electronic box (B) of a pressure and/or temperature sensor, at least one flexible tie (200) forming at least one loop around the rim (J) and at least one means for tensioning said flexible tie,
**characterised by** the fact that said tensioning means comprises a lever (110) mounted so as to be able to pivot with respect to a plate (120) that comes into abutment on the rim (J),
said lever (110) passing from a raised position to a position folded down against the plate (120),
said plate (120) accepting a first end (210) of said flexible tie (200),
said lever (110) accepting the second end (220) of said flexible tie (200),
the raised position enabling the ends (210 and 220) to be mounted and the folded-down position tensioning said flexible tie (200) for the purpose of fixing the box (B) to the rim.

2. Device (D) according to claim 1, **characterised by** the fact that said plate (120) adopts the form of a rack offering, through its plurality of teeth (121), a plurality of positions for accepting said first end (210) of the flexible tie (200).

3. Device (D) according to claim 1, **characterised by** the fact that it comprises a plate extension (400) fixed to one end of the latter (120) in order to offer one or more additional acceptance positions for said first end (210) of the flexible tie (200) in order to allow mounting on a wide range of rim diameters.

4. Device (D) according to claim 1, **characterised by** the fact that said flexible tie (200) consists of a cable, the two ends of which join to form a ring that is flattened to form a doubled elongated tie running around the rim (J) and having a loop at each end (210, 220), a first loop (210) cooperating with the plate (120) and the second loop (220) cooperating with the lever (110).

5. Device (D) according to claim 1, **characterised by** the fact that said flexible tie (200") consists of a cable, the two ends of which are folded on themselves in order to form a loop at each end (210", 220"), a first loop (210") cooperating with the plate (120") and the second loop (220") cooperating with the lever (110").

6. Device (D) according to claim 4 or 5, **characterised by** the fact that said cable is a braided cable covered with plastic.

7. Device (D) according to claim 1, **characterised by** the fact that said box (B) adopts a bottom surface coming into contact with the rim and a top surface preformed so as to accept said flexible tie (200) for holing purposes while enabling said box (B) to slide on the rim (J) along said flexible tie (200).

8. Device (D) according to claim 1, **characterised by** the fact that said electronic box forms said means for tensioning the flexible tie and comprises two parts mounted so as to be able to pivot with respect to each other so as to form a plate (120', 120") coming into contact with the rim (J) and a lever (110', 110") passing from a raised position to a position folded down against the plate (120', 120"), said plate (120', 120") accepting a first end (210', 210") of a flexible tie (200', 200") running around the rim (J), the second end (220', 220") of which is accepted by said lever (110', 110"), the passage from the raised position to the folded-down position tensioning the tie (200', 200") for the purpose of fixing the box to the rim (J).

9. Device (D) according to claim 8, **characterised by** the fact that the components contained in the box are integrated in the plate and/or lever.

10. Device (D) according to claim 8, **characterised by** the fact that the lever (110') of the box comprises all the electronic components necessary for measuring the pressure and/or temperature.

11. Device (D) according to claim 8, **characterised by** the fact that said plate (120") of the box comprises all the electronic components necessary for measuring the pressure and/or temperature.

12. Device (D) according to claim 8, **characterised by** the fact that said lever (110") of the box is pierced with an orifice (115") for discharging dirt introduced between the lever (110") and the plate (120").
